Europäisches Patentamt

(19) European Patent Office

Office européen des brevets

(11) EP 1 069 502 A1

(12) **DEMANDE DE BREVET EUROPEEN**

(43) Date de publication:
**17.01.2001 Bulletin 2001/03**

(51) Int Cl.⁷: **G06F 9/46**, G06F 13/24

(21) Numéro de dépôt: **00401629.1**

(22) Date de dépôt: **08.06.2000**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (72) Inventeurs:<br>• **Attimont, Luc**<br>  **78100 Saint Germain en Laye (FR)**<br>• **Bodin, Jannick**<br>  **92380 Garches (FR)** |
| (30) Priorité: **24.06.1999 FR 9908072** | (74) Mandataire: **Lamoureux, Bernard et al**<br>**COMPAGNIE FINANCIERE ALCATEL**<br>**Dépt. Propriété industrielle**<br>**30, avenue Kléber**<br>**75116 Paris (FR)** |
| (71) Demandeur: **ALCATEL**<br>**75008 Paris (FR)** | |

(54) **Procédé d'exécution d'une tâche en temps réel par un processeur de traitement numérique du signal**

(57)     L'invention concerne un procédé d'exécution d'une tâche en temps réel par un processeur de traitement numérique du signal (TNS) utilisant une mémoire cache, une durée globale (T) étant allouée à l'exécution de ladite tâche et d'interruptions provenant des périphériques associés au processeur, caractérisé en ce que la durée globale (T) est partagée en une pluralité d'intervalles temporels comprenant au moins une période masquée ($T_M$) pendant laquelle ladite tâche est exécutée et les interruptions placées en attente et groupées, et au moins une période non masquée ($T_N$) pendant laquelle ladite tâche est suspendue et le groupe d'interruptions exécuté. Les périodes masquées ($T_M$) et les périodes non masquées ($T_N$) sont définies par un mécanisme matériel comprenant une temporisation.

FIG_2

**Description**

L'invention concerne un procédé de gestion des interruptions provenant de périphériques associés à un processeur de traitement numérique du signal (TNS) utilisant une mémoire cache dans l'exécution de tâches en temps réel.

L'invention trouve une application particulière dans le traitement de la voix pour une transmission téléphonique par exemple, telle que par GSM (Global System for Mobile communication, en anglais qui désigne un standard de téléphonie mobile), mais également dans le traitement et la transmission d'images en temps réel.

On rappelle tout d'abord certaines définitions.

Un processeur de traitement numérique du signal (TNS), connu sous le terme anglais Digital Signal Processing (DSP) est une unité de calcul puissante apte à exécuter des tâches en temps réel c'est à dire dans un certain intervalle de temps fixé. Un tel DSP est ainsi utilisé pour compresser et décompresser de la voix lors d'une communication téléphonique par GSM par exemple, ou pour réaliser une reconnaissance de parole ou pour traiter tout signal numérique quelconque tel qu'une image ou autre.

Les tâches en temps réel sont généralement décomposées en échantillons. Par exemple, dans l'application GSM, la décompression de la voix est échantillonnée sur 20 ms pour être transmise par paquets.

Un DSP utilise avantageusement une mémoire cache.

Une telle mémoire est configurée pour recopier automatiquement ce que lit le processeur. Elle a la caractéristique d'être petite mais rapide.

Lorsque le processeur réalise une boucle de son programme, et demande la même case mémoire à plusieurs reprises, la mémoire cache répond plus vite que la mémoire externe principale et donne au processeur une copie des données précédemment utilisées.

La mémoire cache travaille automatiquement et donne ainsi l'impression que la mémoire externe principale est très rapide.

Cette mémoire est transparente au processeur et cache la mémoire externe principale mais pas les entrées/sorties. Ainsi, lorsqu'une interruption apparaît, la mémoire cache en tient compte.

Une interruption vient interrompre le flot normal du programme pour indiquer un traitement urgent à exécuter. L'arrivée d'une interruption déroute le processeur sur un gestionnaire d'interruption qui sauvegarde le contexte d'exécution du programme en cours et traite l'interruption.

L'exécution des interruptions utilise, de la même manière que le programme principal, la mémoire cache. Cette dernière est ainsi partiellement ou totalement vidée du contenu des données et codes du programme en cours pour être remplie par les données et codes des interruptions à traiter.

Lors de la reprise du programme d'exécution de la tâche en temps réel par le DSP, la mémoire cache doit par conséquent être reremplie par les données et codes du programme.

Un tel rechargement est nécessairement coûteux en temps. Or le temps est particulièrement précieux dans une application temps réel.

Jusqu'à présent, les DSP utilisaient leur propre mémoire pour tenir leur contrainte temps réel. De plus, ils étaient peu interrompus, essentiellement par une interruption venant signaler que l'échantillon de voix suivant était prêt.

Aujourd'hui, on assiste à une évolution des tâches exécutées par le DSP au fur et à mesure que des options sont rajoutées à l'appareil principal.

Ainsi, des tâches de plus en plus variées, telles qu'un fonctionnement main libre, une reconnaissance de parole, un traitement graphique ou autre, sont ajoutées à la tâche principale de traitement de la voix.

Le DSP étant une machine de calcul puissante, il peut également être sollicité pour des traitements graphiques, comme l'affichage d'une image en provenance d'internet par exemple.

Certaines de ces fonctions, comme les fonctions graphiques ou l'affichage d'image, imposent au DSP un accès à la mémoire externe principale. D'autre part, le code exécuté par le DSP pourra avantageusement être stocké en mémoire externe principale, ce qui permettra une mise à jour plus aisée de ce code. Il est donc indispensable d'utiliser la mémoire cache qui est chargée avec le code et les données accédées par le DSP dans la mémoire principale pour permettre une exécution plus rapide des traitements.

En plus des traitements temps réel, comme la compression de voix, et des traitements qui ne sont pas temps réel, comme les fonctions graphiques, le DSP doit exécuter les traitements correspondant aux interruptions. Par exemple, dans le cas de la téléphonie par internet, le DSP doit simultanément traiter la compression et décompression de la voix et les interruptions provenant de la ligne série qui envoie un flot continu d'octets en provenance du modem.

A chaque interruption, le code et les données de l'interruption remplacent partiellement ou totalement le code et les données du traitement temps réel dans la mémoire cache. Ainsi, après chaque interruption, le DSP doit recharger la mémoire cache avec le code et les données relatifs au programme d'exécution de la tâche temps réel. Cela introduit nécessairement un ralentissement important surtout lorsque le nombre d'interruptions est élevé, le traitement temps réel n'étant alors plus garanti.

Plusieurs solutions ont déjà été proposées dans l'art antérieur pour garantir le traitement en temps réel de la tâche principale.

Une première solution consiste à masquer les interruptions pendant la durée d'exécution de la tâche principale du DSP.

Une telle solution impose de dimensionner les périphériques pour qu'ils puissent conserver en mémoire locale les données relatives aux interruptions pendant le temps de masquage. Par exemple, un périphérique de communication doit garder en mémoire locale les données émises ou reçues pendant le temps de masquage des interruptions.

Si on connaît la tâche temps réel que le DSP doit exécuter, telle qu'une compression de voix, on peut déterminer à l'avance le temps d'exécution de cette tâche et donc le temps maximum de masquage des interruptions. Il est alors possible de dimensionner les périphériques pour qu'ils résistent à une latence de réponse correspondante au temps de masquage. Néanmoins, lorsqu'on effectue des tâches en multimédia et qu'il soit alors nécessaire de dimensionner les périphériques pour le plus gros traitement multimédia envisageable, on obtient des systèmes coûteux.

Si on choisit de ne pas stocker les données dans les périphériques pendant le temps de masquage des interruptions, il faut prévoir des mécanismes matériels d'accès directs à la mémoire principale pour que les flots de données relatifs aux périphériques soient stockés dans des mémoires tampons ou directement dans des mémoires principales. Une telle solution est envisageable mais rend le système complexe et lourd avec des périphériques plus puissants qu'il n'est nécessaire.

Une deuxième solution proposée par l'art antérieur consiste à verrouiller la mémoire cache afin dé l'empêcher de perdre son contenu.

Ainsi, après le premier tour de boucle du programme principal du DSP, la mémoire cache est verrouillée. Lorsque les interruptions se présentent, elles sont traitées sans utiliser la mémoire cache.

Une telle solution présente cependant de nombreux inconvénients.

D'une part, il peut être délicat de charger le programme principal dans la mémoire cache avant de verrouiller cette dernière si le DSP traite un algorithme contenant des tests conditionnels divisant le programme en différentes branches de traitement. De plus, verrouiller la mémoire cache revient à la transformer en mémoire locale chargée manuellement. On perd ainsi les avantages associés à la mémoire cache.

D'autre part, le traitement des interruptions sera ralenti par l'interdiction d'utiliser la mémoire cache.

En outre, dans le cadre d'une application sans fil (comme le GSM), les accès à la mémoire externe sont coûteux en énergie ce qui a un impact sur l'autonomie de l'appareil.

Cette solution de verrouiller la mémoire cache pendant le traitement de la tâche temps réel n'est donc pas optimale.

Une troisième solution consiste à utiliser l'unité de gestion de mémoire (MMU : Memory Management Unit en anglais).

Cette MMU indique les données cachables, telles que les données mémoires, les données non cachables, telles que les Entrées/Sorties, et les données pouvant être modifiées par un microcontrôleur. La MMU peut imposer que les codes et données associés aux interruptions ne soient pas cachables. Ainsi, lors de l'exécution d'une interruption, les données associées seront considérées comme temporaires et ne seront pas placées en mémoire cache.

Cette solution présente un inconvénient majeur du fait que les interruptions ne bénéficient pas des avantages de la mémoire cache, ce qui peut considérablement ralentir leur traitement, avec pour conséquence directe l'augmentation du temps de traitement global de la tâche principale du DSP.

Une autre méthode proposée par l'art antérieur consiste à surdimensionner le système afin que le DSP puisse tenir le temps réel même si la mémoire cache est constamment vidée par des interruptions.

Cette solution peut être applicable sur un ordinateur de type PC car le processeur est souvent sous utilisé, mais pas sur un portable de la norme GSM.

Les solutions proposées par l'art antérieur ne permettent pas de garantir le traitement d'une tâche temps réel par le DSP ainsi que la prise en compte rapide des interruptions.

Il s'agit en général de solutions radicales consistant à surdimensionner le système.

Les solutions proposées sont souvent théoriques mais économiquement inapplicables dans un environnement d'une optimisation des coûts.

La présente invention a pour but de pallier aux inconvénients de l'art antérieur et propose un nouveau moyen de gestion des interruptions du DSP, économique et sans surdimensionner le système.

L'invention propose une solution dans laquelle la mémoire cache est accessible aux interruptions comme au programme principal.

Selon la particularité de l'invention, les interruptions sont regroupées en tas, afin d'être traitées par groupes, de manière à ce que la mémoire cache ne soit vidée et reremplie, au vu du DSP, qu'une seule fois par groupe d'interruptions.

On a nécessairement un nombre de groupes inférieur au nombre d'interruptions, ce qui permet un gain de temps global important dans le traitement de la tâche principale en temps réel.

La présente invention a plus particulièrement pour objet un procédé d'exécution d'une tâche en temps réel par un processeur de traitement numérique du signal utilisant une mémoire cache, une durée globale étant allouée à l'exécution de ladite tâche et d'interruptions provenant des périphériques associés au processeur, caractérisé en ce que la durée globale est partagée en une pluralité d'intervalles temporels comprenant au moins une période masquée pendant laquelle ladite tâche est exécutée et les interruptions placées en attente et groupées, et au moins une période non masquée pendant laquelle ladite tâche est suspendue et le groupe d'interruptions exécuté, les périodes masquées et les périodes non masquées étant définies par un mécanisme matériel comprenant une temporisation.

Selon une particularité de l'invention, la durée des périodes masquées est fixée par la temporisation.

Selon un premier mode de réalisation, la temporisation est armée périodiquement.

Selon un deuxième mode de réalisation, la temporisation est armée automatiquement après le traitement du groupe d'interruptions en attente.

Selon une variante de réalisation, la temporisation est armée par le traitement de la dernière interruption du groupe en attente.

Selon un troisième mode de réalisation, la temporisation est armée par la mise en attente de la première interruption.

Selon un mode de réalisation préférentiel, la temporisation est réarmée automatiquement si aucune interruption ne se trouve en attente à l'échéance de la temporisation.

Selon une caractéristique de l'invention, la durée des périodes masquées correspond au plus petit temps de latence des périphériques associés au processeur.

Selon un mode de réalisation particulier, la durée des périodes masquée est fixée à 1 ms.

Selon un mode de réalisation particulier, la durée globale d'exécution d'un échantillon de la tâche en temps réel est fixée à 20 ms.

L'invention présente l'avantage d'être simple à réaliser et apporte une solution économique au problème du traitement d'une tâche en temps réel par un DSP quel que soit le nombre d'interruptions intervenant pendant ledit traitement.

L'invention n'impose aucun surdimensionnement du système.

L'invention cherche essentiellement à optimiser le traitement de la tâche temps réel en limitant le nombre de rechargements de la mémoire cache.

D'autres avantages et particularités de l'invention apparaîtront clairement dans la suite de la description qui va suivre et qui est donnée à titre d'exemple illustratif et non limitatif et en référence aux dessins annexés sur lesquels :

- la figure 1 est un diagramme temporel des périodes de masquage et de démasquage des interruptions selon un premier mode de réalisation de l'invention,
- la figure 2 est un diagramme temporel des périodes de masquage et de démasquage des interruptions selon un deuxième mode de réalisation de l'invention,
- la figure 3 est un diagramme temporel des périodes de masquage et de démasquage des interruptions selon un troisième mode de réalisation de l'invention,
- la figure 4 un diagramme temporel des périodes de masquage et de démasquage des interruptions selon une variante de réalisation de l'invention.

Dans son principe, l'invention consiste à grouper les interruptions se présentant pendant le traitement d'une tâche en temps réel par le DSP pour les traiter à la suite les unes des autres avant de reprendre la tâche temps réel, de manière à n'avoir à recharger la mémoire cache qu'après le traitement de chaque groupe d'interruptions et non après le traitement de chaque interruption.

Le groupement des interruptions est réalisé en masquant ces dernières dans un premier temps comme cela est connu dans l'art antérieur.

L'invention consiste à démasquer les interruptions, en cours de traitement de la tâche principale en temps réel, afin qu'elles puissent être traitées, puis à les remasquer pour un temps donné.

On estime la durée maximum du temps de traitement de la tâche temps réel en estimant le nombre de fois où la mémoire cache est vidée puis rechargée.

Il est possible de connaître le nombre d'interruptions intervenant pendant le traitement d'une tâche du DSP, mais cela n'est pas complètement optimal.

En effet, les interruptions sont associées aux périphériques qui sont associés à un flot de données avec un débit maximum. Les interruptions ont par conséquent un débit maximum.

On a en effet la relation :

$$T = T_{DSP} + T_{it} + T_{cache}$$

Avec

| | |
|---|---|
| T : | temps d'exécution globale de la tâche temps réel, |
| $T_{DSP}$ : | temps d'exécution de la tâche par le DSP, |
| $T_{it}$ : | temps d'exécution des interruptions, |
| $T_{cache}$ : | temps de rechargement de la mémoire cache. |

L'invention cherche à minimiser $T_{cache}$ afin de tenir le temps imposé par T qui correspond à la période d'échantillonnage de la tâche en temps réel.

Pour ce faire, l'invention propose un mécanisme matériel comportant des moyens de masquage des interruptions et des moyens de génération d'une temporisation par l'association d'une horloge avec de moyens comptage.

Le masquage des interruptions est ainsi limité dans le temps. Le temps d'exécution maximum de la tâche en temps réel est borné et divisé en intervalles temporels comprenant des périodes masquées $T_M$ et des périodes non masquées $T_n$.

La durée globale T d'exécution de la tâche DSP comprend des périodes masquées $T_M$ pendant lesquelles ladite tâche est exécutée et les interruptions groupées en tas et placées en attente, et des périodes non masquées $T_N$ pendant lesquelles la tâche DSP est interrompue et les interruptions traitées selon leur priorité.

La tâche principale temps réel du DSP est exécutée pendant les périodes masquées $T_M$. Pendant ces périodes, les interruptions sont placées en attente. Selon un mode de réalisation préférentiel, les périodes masquées $T_M$ sont déterminées par un mécanisme de temporisation matérielle basé sur une horloge qui démasque les interruptions en fin de course.

Les interruptions sont alors traitées pendant ces périodes non masquées $T_N$, puis la temporisation est réarmée pour compter une nouvelle période masquée $T_M$.

Différents mécanismes sont envisageables pour masquer et démasquer les interruptions.

Tout d'abord, la temporisation peut être cyclique et masquer et démasquer les interruptions de manière régulière, avec une période de masquage correspondant au plus petit temps de latence des périphériques.

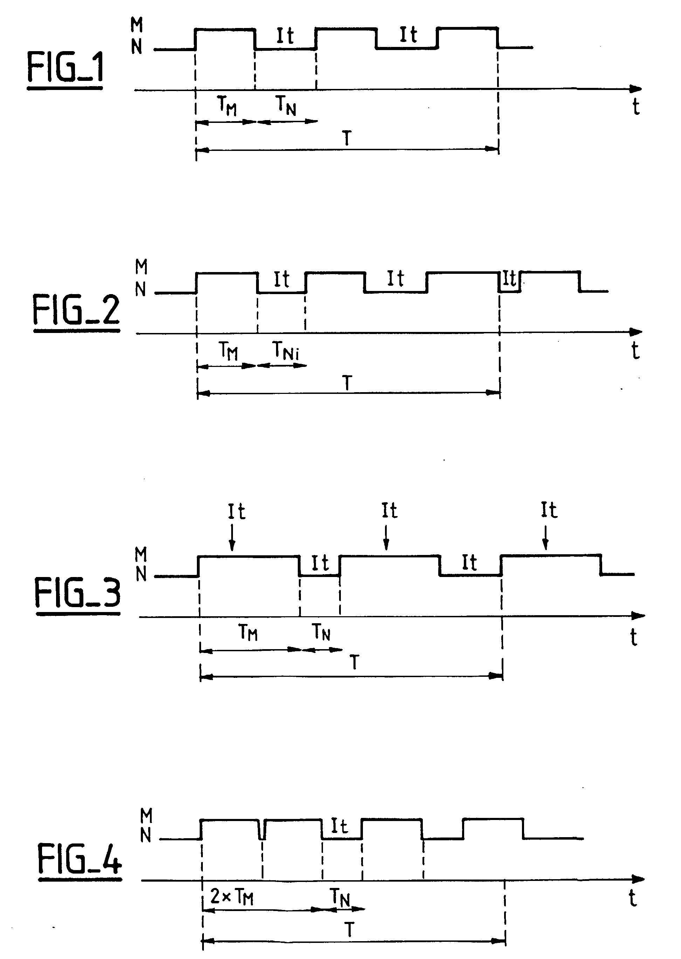

Selon un premier mode de réalisation, illustré sur la figure 1, la temporisation est armée régulièrement pour le comptage d'une période masquée $T_M$.

Les interruptions It sont placées en attente pendant cette période et exécutées pendant les périodes non masquées $T_N$ .

Cette variante de réalisation, avec un comptage périodique des périodes masquées et non masquées n'est pas optimale car elle oblige à dimensionner les périodes non masquées $T_N$ pour le temps d'exécution des interruptions le plus long envisageable.

Selon une autre mode de réalisation, illustré sur la figure 2, la temporisation est armée automatiquement après la fin du mode interruption par le matériel, pour le comptage d'une nouvelle période masquée $T_M$.

On peut également envisager la possibilité d'armer la temporisation par une interruption « balai » de très faible priorité et qui se place après toutes les interruptions en attente.

La durée des périodes non masquées $T_{Ni}$ est donc variable et dépend des interruptions à traiter.

Selon un autre mode de réalisation, illustré sur la figure 3, la temporisation est armée pour le comptage d'une période masquée $T_M$ lorsque la première interruption It se présente.

Ce mode de réalisation permet d'attribuer un maximum de temps au traitement de la tâche principale temps réel du DSP.

Selon une variante de réalisation, illustrée sur la figure 4, quelque soit le mécanisme choisi pour armer la temporisation, cette dernière reprend son comptage à zéro pour une nouvelle période masquée $T_M$ si aucune interruption ne se trouve en attente à l'échéance de la temporisation.

Selon un mode de réalisation particulier, la durée globale T de la tâche du DSP est fixée à 20 ms, ce qui correspond avantageusement à un échantillon de voix dans le cadre d'une application GSM.

Préférentiellement, la durée des périodes masquées $T_M$ définie par la temporisation est fixée à 1 ms, et celle des périodes non masquées $T_N$ dépend du mode de réalisation choisi.

## Revendications

1. Procédé d'exécution d'une tâche en temps réel par un processeur de traitement numérique du signal (TNS) utilisant une mémoire cache, une durée globale (T) étant allouée à l'exécution de ladite tâche et d'interruptions provenant des périphériques associés au processeur, caractérisé en ce que la durée globale (T) est partagée en une pluralité d'intervalles temporels comprenant au moins une période masquée ($T_M$) pendant laquelle ladite tâche est exécutée et les interruptions placées en attente et groupées, et au moins une période non masquée ($T_N$) pendant laquelle ladite tâche est suspendue et le groupe d'interruptions exécuté.

2. Procédé d'exécution d'une tâche par un processeur de TNS selon la revendication 1, caractérisé en ce que les périodes masquées ($T_M$) et les périodes non masquées ($T_N$) sont définies par un mécanisme matériel.

3. Procédé d'exécution d'une tâche par un processeur de TNS selon la revendication 2, caractérisé en ce que le mécanisme matériel comprend une temporisation.

4. Procédé d'exécution d'une tâche par un processeur de TNS selon la revendication 3, caractérisé en ce que la durée des périodes masquées ($T_M$) est fixée par la temporisation.

5. Procédé d'exécution d'une tâche par un processeur de TNS selon la revendication 3 à 4, caractérisé en ce que la temporisation est armée périodiquement.

6. Procédé d'exécution d'une tâche par un processeur de TNS selon la revendication 3 à 4, caractérisé en ce que la temporisation est armée automatiquement après le traitement du groupe d'interruptions en attente.

7. Procédé d'exécution d'une tâche par un processeur de TNS selon la revendication 3 à 4, caractérisé en ce que la temporisation est armée par le traitement de la dernière interruption du groupe.

8. Procédé d'exécution d'une tâche par un processeur de TNS selon la revendication 3 à 4, caractérisé en ce que la temporisation est armée par la mise en attente de la première interruption en attente.

**9.** Procédé d'exécution d'une tâche par un processeur de TNS selon l'une quelconque des revendications 3 à 7, caractérisé en ce que la temporisation est réarmée automatiquement si aucune interruption ne se trouve en attente à l'échéance de la temporisation.

**10.** Procédé d'exécution d'une tâche par un processeur de TNS selon l'une quelconque des revendications précédentes, caractérisé en ce que la durée des périodes masquées ($T_M$) correspond au plus petit temps de latence des périphériques associés au processeur.

**11.** Procédé d'exécution d'une tâche par un processeur de TNS selon la revendication 10, caractérisé en ce que la durée des périodes masquée ($T_M$) est fixée à 1 ms.

**12.** Procédé d'exécution d'une tâche par un processeur de TNS selon l'une quelconque des revendications précédentes, caractérisé en ce que la durée globale d'exécution (T) d'un échantillon de la tâche en temps réel est fixée à 20 ms.

FIG_1

FIG_2

FIG_3

FIG_4

| Office européen des brevets | **RAPPORT DE RECHERCHE EUROPEENNE** | Numéro de la demande<br>EP 00 40 1629 |
| --- | --- | --- |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
| --- | --- | --- | --- |
| A | US 5 708 814 A (CUTLER DAVID N ET AL) 13 janvier 1998 (1998-01-13)<br>* colonne 3, ligne 30 - colonne 7, ligne 12 *<br>--- | 1 | G06F9/46<br>G06F13/24 |
| A | US 5 404 536 A (RAMAKRISHNAN KADANGODE K ET AL) 4 avril 1995 (1995-04-04)<br>* colonne 2, ligne 41 - colonne 3, ligne 33 *<br>* colonne 5, ligne 53 - ligne 58 *<br>--- | 1-3, 10-12 | |
| A | US 5 530 597 A (BOWLES JAMES E ET AL) 25 juin 1996 (1996-06-25)<br>* colonne 2, ligne 9 - ligne 29 *<br>--- | 1 | |
| A | US 5 146 595 A (FUJIYAMA HIROYUKI ET AL) 8 septembre 1992 (1992-09-08)<br>* abrégé *<br>* colonne 3, ligne 55 - colonne 6, ligne 40 *<br>--- | 1 | |
| A | EP 0 617 361 A (DIGITAL EQUIPMENT CORP) 28 septembre 1994 (1994-09-28)<br>* colonne 6, ligne 43 - ligne 49 *<br>----- | 1 | **DOMAINES TECHNIQUES RECHERCHES (Int.Cl.7)**<br><br>G06F |

Le présent rapport a été établi pour toutes les revendications

| Lieu de la recherche | Date d'achèvement de la recherche | Examinateur |
| --- | --- | --- |
| LA HAYE | 23 novembre 2000 | Michel, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1629

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

23–11–2000

| Document brevet cité au rapport de recherche | | Date de publication | Membre(s) de la famille de brevet(s) | | Date de publication |
|---|---|---|---|---|---|
| US 5708814 | A | 13–01–1998 | AUCUN | | |
| US 5404536 | A | 04–04–1995 | AUCUN | | |
| US 5530597 | A | 25–06–1996 | CN | 1081776 A,B | 09–02–1994 |
| | | | DE | 69322554 D | 28–01–1999 |
| | | | DE | 69322554 T | 19–08–1999 |
| | | | EP | 0581479 A | 02–02–1994 |
| | | | JP | 6075779 A | 18–03–1994 |
| US 5146595 | A | 08–09–1992 | JP | 1126751 A | 18–05–1989 |
| | | | JP | 1831908 C | 29–03–1994 |
| | | | JP | 5042023 B | 25–06–1993 |
| | | | EP | 0316138 A | 17–05–1989 |
| | | | KR | 9201813 B | 03–03–1992 |
| EP 0617361 | A | 28–09–1994 | US | 6085215 A | 04–07–2000 |

EPO FORM P0460

Pour tout renseignement concernant cette annexe : voir Journal Officiel de l'Office européen des brevets, No.12/82